(19) Europäisches Patentamt
European Patent Office
Office européen des brevets

(11) EP 3 172 592 B1

(12) **FASCICULE DE BREVET EUROPEEN**

(45) Date de publication et mention
de la délivrance du brevet:
**11.03.2020 Bulletin 2020/11**

(21) Numéro de dépôt: **15739606.0**

(22) Date de dépôt: **22.07.2015**

(51) Int Cl.:
***G01T 1/167*** *(2006.01)*

(86) Numéro de dépôt international:
**PCT/EP2015/066763**

(87) Numéro de publication internationale:
**WO 2016/012499 (28.01.2016 Gazette 2016/04)**

(54) **DISPOSITIF ET PROCÉDÉ DE MESURE DE LA RADIOACTIVITÉ D'UN MATÉRIAU**

VORRICHTUNG UND VERFAHREN ZUR MESSUNG DER RADIOAKTIVITÄT EINES MATERIALS

DEVICE AND METHOD FOR MEASURING THE RADIOACTIVITY OF A MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.07.2014 FR 1457074**

(43) Date de publication de la demande:
**31.05.2017 Bulletin 2017/22**

(73) Titulaire: **Areva Mines
92400 Courbevoie (FR)**

(72) Inventeurs:
• **TOUBON, Hervé
78690 Les Essarts-le-Roi (FR)**

• **BOURVA, Ludovic
Oxfordshire, Wantage OX12 9UW (GB)**

(74) Mandataire: **Lavoix
2, place d'Estienne d'Orves
75441 Paris Cedex 09 (FR)**

(56) Documents cités:
**FR-A1- 2 665 260     GB-A- 2 017 294
US-A- 5 162 095     US-A- 5 732 115**

• **"Conveyor Mounted Radiation System Work
Plan", , 1 avril 2004 (2004-04-01), XP055190878,
Extrait de l'Internet:
URL:http://pbadupws.nrc.gov/docs/ML0412/ML
041270232.pdf [extrait le 2015-05-21]**

**Description**

La présente invention concerne le domaine de la mesure de radioactivité d'un matériau.

Lors de l'exploitation d'une mine de minerai radioactif ou pour le tri de terres contaminées, il est souhaitable d'analyser la radioactivité du matériau considéré.

Pour ce faire, il est possible de réaliser en laboratoire des mesures de radioactivité sur des échantillons prélevés dans le matériau.

Néanmoins, ces mesures ponctuelles ne permettent pas d'analyser l'ensemble du matériau (minerai, matériau issu d'un démantèlement ou de l'assainissement d'installations nucléaires, terres contaminées par différents types de radionucléides). En outre, l'obtention des résultats d'analyse peut prendre un certain temps.

GB2017294A divulgue un dispositif de tri de minerai comprenant une bande convoyeuse pour transporter le minerai, un dispositif de comptage propre à réaliser une mesure de comptage du nombre de rayonnements gamma émergeant du minerai et en déduire un niveau de radioactivité total du matériau, et un dispositif d'aiguillage pour trier les différentes zones du minerai en fonction de leur niveau de radioactivité.

Néanmoins, ces mesures permettent uniquement de mesurer le niveau de radioactivité total du matériau mais ne permettent pas d'identifier les radionucléides présents dans le matériau, ni de déterminer l'origine ou la répartition de la radioactivité totale du matériau s'il y a plusieurs radionucléides présents dans le matériau.

US5162095A divulgue un dispositif d'analyse de matériau en vrac comprenant une unité de mesure dans laquelle des rayonnements gamma sont classés suivant leur énergie et comptés pendant une durée prédéterminée.

Un des buts de l'invention est de proposer un dispositif de mesure de radioactivité permettant d'identifier et quantifier les radionucléides présents au sein d'un matériau transporté sur un convoyeur, notamment dans le cas d'un minerai radioactif.

A cet effet, l'invention propose un dispositif de mesure de radioactivité selon la revendication 1.

Selon des modes de réalisations particuliers, le dispositif de mesure de radioactivité comprend une ou plusieurs des caractéristiques suivantes :

- il est configuré pour calculer l'activité, la masse et/ou la teneur d'au moins un radionucléide présent dans le matériau en fonction d'une mesure de spectrométrie ;
- il est configuré pour calculer l'activité, la masse et/ou la teneur d'au moins un radionucléide en fonction d'une mesure de comptage et de la teneur de ce radionucléide calculée en fonction d'une mesure de spectrométrie précédente ;
- il comprend un dispositif de mesure de la hauteur de matériau sur le convoyeur au droit du dispositif de spectrométrie gamma ;
- il comprend un dispositif de pesage pour mesurer la masse du matériau transporté par le convoyeur ;
- il est configuré pour calculer l'activité, la masse et/ou la teneur d'au moins un radionucléide en fonction d'une efficacité de détection de photons par le dispositif de spectrométrie gamma en fonction de l'énergie de ces photons, de la hauteur de matériau sur le convoyeur au droit du ou de chaque détecteur de spectrométrie gamma et/ou de la masse du matériau transporté par le convoyeur ;
- la hauteur de matériau sur le convoyeur est comprise entre 5 cm et 60 cm ;
- le dispositif de spectrométrie gamma comprend plusieurs détecteurs de spectrométrie gamma.

L'invention propose également un système de mesure de radioactivité selon la revendication 6.

Selon des modes de réalisation particuliers, le système comprend une ou plusieurs des caractéristiques suivantes :

- le convoyeur est un convoyeur à bande comprenant une bande sans fin pour le transport du matériau.
- la hauteur de matériau sur le convoyeur est comprise entre 5 cm et 60 cm ;
- le dispositif de spectrométrie gamma comprend plusieurs détecteurs de spectrométrie gamma.

L'invention propose également un procédé de mesure de radioactivité selon la revendication 8.

Selon des modes de mise en œuvres particuliers, le procédé peut comprendre une ou plusieurs des caractéristiques suivantes :

- il comprend le calcul de l'activité, de la masse et/ou de la teneur d'au moins un radionucléide présent dans le matériau en fonction d'une mesure de spectrométrie ;
- il comprend le calcul de l'activité, de la masse et/ou de la teneur d'au moins un radionucléide en fonction d'une mesure de comptage et de la teneur de ce radionucléide calculée en fonction d'une mesure de spectrométrie précédente ;
- il comprend la mesure de la hauteur de matériau sur le convoyeur au droit du dispositif de spectrométrie gamma ;

- il comprend la mesure de la masse du matériau transporté par le convoyeur ;
- il comprend le calcul de l'activité, de la masse et/ou de la teneur d'au moins un radionucléide en fonction d'une efficacité de détection de photons par le dispositif de spectrométrie gamma en fonction de l'énergie de ces photons, de la hauteur de matériau au droit du ou de chaque détecteur de spectrométrie gamma, et/ou de la mesure de la masse du matériau transporté par le convoyeur ;
- il comprend la vérification d'une mesure de spectrométrie et/ou de calculs effectués à partir de cette mesure de spectrométrie par comparaison d'activité, de masse et/ou de teneur d'au moins un radionucléide, en particulier le bismuth 214 (Bi214), calculées en fonction de raies spectrales principales d'énergies caractéristiques de ce même radionucléide ;
- il comprend le calcul de l'activité, de la masse et/ou de la teneur d'uranium 235 (U235) et/ou d'uranium 238 (U238) en fonction des résultats d'une mesure de spectrométrie pour le protactinium 234 (Pa234) ;
- il comprend le calcul de l'activité, de la masse et/ou de la teneur en protactinium 234, le calcul de l'activité, de la masse et/ou de la teneur en bismuth 214 (Bi214) et/ou le calcul de l'activité, de la masse et/ou de la teneur en radium 226 (Ra226), en fonction d'une mesure de spectrométrie ;
- il comprend le calcul de l'activité, de la masse et/ou de la teneur en uranium 235 (U235) et/ou le calcul de l'activité, de la masse et/ou de la teneur en uranium 238 (U238) en fonction d'une mesure de spectrométrie ;
- il comprend le calcul de l'activité, de la masse et/ou de la teneur en uranium 235 et/ou le calcul de l'activité, de la masse et/ou de la teneur en uranium 238 est effectué à partir de l'activité, de la masse et/ou de la teneur calculées pour le protactinium 234, le bismuth 214 et/ou le radium 226 ;
- la hauteur de matériau sur le convoyeur est comprise entre 5 cm et 60 cm ;
- le dispositif de spectrométrie gamma comprend plusieurs détecteurs de spectrométrie gamma.

L'invention et ses avantages seront mieux compris à la lecture de la description qui va suivre, donnée uniquement à titre d'exemple non limitatif, et faite en référence aux dessins annexés, sur lesquels :

- La Figure 1 est une vue schématique de côté d'un système de mesure de radioactivité comprenant un convoyeur et un dispositif de mesure de radioactivité ;
- La Figure 2 est une vue schématique en coupe transversale du système de la Figure 1, selon II-II sur la Figure 1 ;
- La Figure 3 est une vue schématique du dispositif de mesure de radioactivité de l'ensemble des Figures 1 et 2 ; et
- La Figures 4 est un graphique illustrant un spectre résultant d'une mesure de spectrométrie gamma.

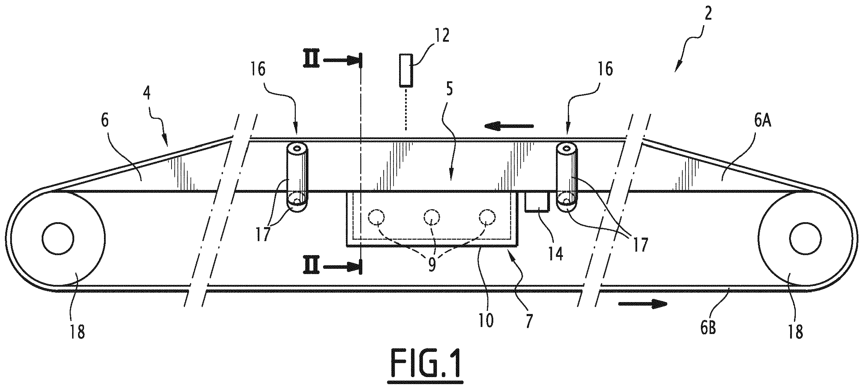

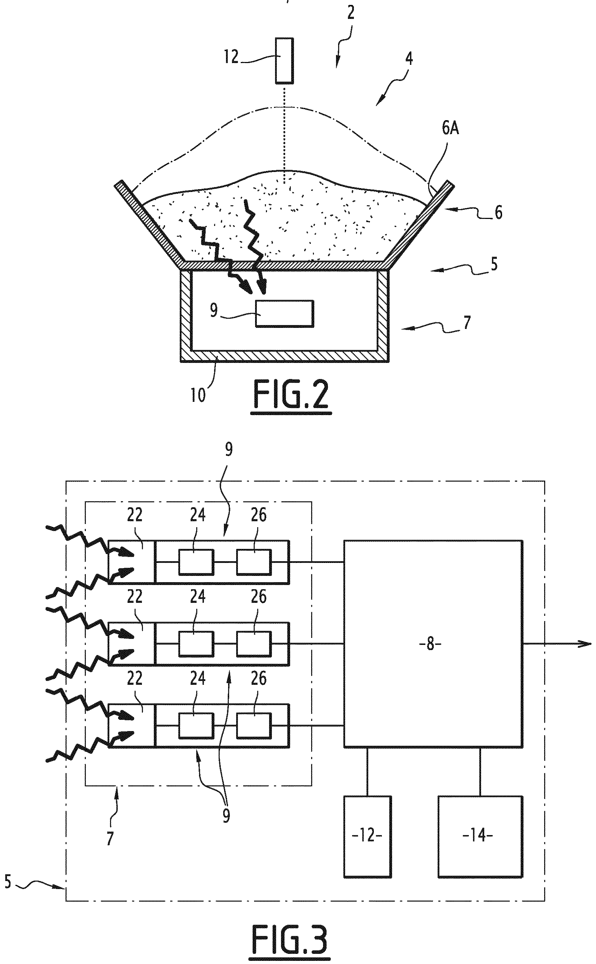

Le système 2 de mesure de radioactivité des Figures 1 et 2 comprend un convoyeur 4 prévu pour convoyer un matériau, par exemple un minerai radioactif extrait d'une mine, et un dispositif de mesure de radioactivité 5 adapté pour mesurer la radioactivité du flux de matériau lors du transport du matériau par le convoyeur 4, en réalisant notamment des mesures de spectrométries.

Le convoyeur 4 comprend un organe de convoyage sans fin pour transporter le matériau. Le convoyeur 4 est ici un convoyeur à bande, dont l'organe de convoyage est une bande 6 convoyeuse sans fin.

Le dispositif de mesure de radioactivité 5 est adapté pour réaliser à la fois des mesures de spectrométrie au cours desquelles le dispositif de mesure de radioactivité 5 identifie et quantifie les différents radionucléides contenus dans le matériau lors de son transport par le convoyeur 4, et des mesures de comptage au cours desquelles le dispositif de mesure de radioactivité 5 compte les photons émis par le matériau lors de son transport par le convoyeur pour déterminer la radioactivité totale du matériau.

Le dispositif de mesure de radioactivité 5 comprend un dispositif de spectrométrie gamma 7 adapté pour détecter les photons gamma émis par le matériau lors de son transport par le convoyeur 4 et mesurer l'énergie des photons détectés, et une unité de traitement de données 8 pour traiter des signaux de mesure correspondants fournis par le dispositif de spectrométrie gamma 7. Le dispositif de spectrométrie gamma 7 est disposé sur le trajet du convoyeur 4 de façon à pouvoir détecter les photons gamma émis par le matériau lors de son transport par le convoyeur 4.

Le dispositif de spectrométrie gamma 7 comprend au moins un détecteur de spectrométrie gamma, ou spectromètre gamma 9, pour réaliser des mesures de spectrométrie gamma sur le matériau lors de son transport par le convoyeur 4. Le dispositif de spectrométrie gamma 7 comprend de préférence plusieurs spectromètres gamma 9, typiquement deux à quatre spectromètres gamma, ici trois spectromètres gamma 9 (Figure 1).

Chaque spectromètre gamma 9 détecte des photons émis par le matériau situé sur la bande 6 et émergeant de ce matériau, et mesure l'énergie de chaque photon détecté. Chaque spectromètre gamma 9 fournit en sortie un signal représentatif du nombre de photons émis et de l'énergie associée à chaque photon détecté. Un tel signal permet ensuite de déterminer un spectre gamma indiquant, sur une période de temps donnée, le nombre de photon détecté en fonction de l'énergie.

Le dispositif de spectrométrie gamma 7 comprend un blindage 10 entourant les spectromètres gamma 9 et agencé pour permettre aux photons émergeant du matériau transporté par le convoyeur 4 et situé au droit des spectromètres gamma 9 d'atteindre les spectromètres gamma 9, tout en protégeant les spectromètres gamma 9 des photons émis par d'autres sources de photons. Le blindage 10 est réalisé dans un matériau atténuant fortement les rayonnements, par exemple en plomb ou en tungstène.

En option, le dispositif de mesure de radioactivité 5 comprend un capteur de hauteur 12 pour mesurer la hauteur du matériau transporté par le convoyeur 4 au droit du dispositif de spectrométrie gamma 7.

Le capteur de hauteur 12 est par exemple un télémètre laser disposé au-dessus de la bande 6 pour mesurer la distance entre le télémètre et la surface supérieure du matériau transporté par la bande 6, et calculer la hauteur de matériau en fonction de la distance du télémètre au convoyeur 4 en l'absence de matériau sur le convoyeur 4.

La hauteur du matériau transporté par la bande 6 est typiquement comprise entre 5 cm et 60 cm.

En option, le système 2 comprend un gabarit pour niveler le niveau du matériau sur la bande 6. La hauteur du matériau sur la bande 6 est alors sensiblement constante.

En option, le dispositif de mesure de radioactivité 5 comprend un dispositif de pesage 14 pour mesurer la masse du matériau transporté par le convoyeur 4 au droit du dispositif de spectrométrie gamma 7 pendant une période de temps donnée.

Le capteur de hauteur 12 et le dispositif de pesage 14 sont disposés au droit du dispositif de spectrométrie gamma 7 ou décalé en amont ou en aval par rapport au dispositif de spectrométrie gamma 7 le long du convoyeur 4. Dans le cas d'un décalage en amont ou en aval, la connaissance du déplacement du convoyeur 4 permet ensuite d'associer chaque mesure de hauteur et/ou de masse à la mesure de spectrométrie correspondante.

La bande 6 possède un brin de transport 6A assurant le transport du matériau et (circulant vers la gauche sur la Figure 1) et un brin de retour 6B (circulant vers la droite sur la Figure 1).

Le dispositif de spectrométrie gamma 7 est disposé de manière à effectuer des mesures sur le matériau transporté par la bande 6, plus spécifiquement par le brin de transport 6. Le dispositif de spectrométrie gamma 7 est de préférence disposé au-dessous du brin de transport 6A, en étant de préférence accolé au brin de transport 6A. En variante, le dispositif de spectrométrie gamma 7 est disposé au-dessus ou sur les côtés du brin de transport 6A.

Le convoyeur 4 comprend des ensembles de guidage 16 à rouleaux répartis sous le brin de transport 6A pour le guider et le supporter. Le dispositif de spectrométrie gamma 7 est disposé entre deux ensembles de guidage 16 adjacents, de manière à être placé au plus près de la bande 6. Les ensembles de guidage 16 comprennent en option des rouleaux de guidage 17 qui sont agencés pour relever les parties latérales du brin de transport 6A.

La bande 6 est enroulée sur deux rouleaux de renvoi 18, de sorte que le brin de transport 6A et le brin de retour 6B circulent chacun d'un rouleau 18 à l'autre, en sens opposés. Au moins un des rouleaux de renvoi 18 est motorisé pour l'entraînement de la bande 6.

En option, dans le cas de températures ambiantes excessives, le dispositif de mesure de radioactivité 5 comprend un système de ventilation et/ou de climatisation agencé pour maintenir le dispositif de spectrométrie (spectromètres) dans des conditions de fonctionnement standard pour ce type de matériel (-10°C < T < +30°C).

Comme illustré sur la Figure 3, chaque spectromètre gamma 9 comprend un détecteur de photons 22 propre à détecter des photons atteignant le détecteur et à fournir pour chaque photon détecté un signal de mesure représentatif de l'énergie de ce photon. Chaque photon détecté est donc compté et caractérisé par son énergie.

Le détecteur de photon 22 est par exemple un détecteur à scintillation comprenant un cristal propre à émettre un signal lumineux lorsqu'il est frappé par un photon, qui est ensuite converti en signal électrique. Le cristal est par exemple réalisé en bromure de lanthane (LaBr).

En variante, le détecteur de photon 22 est un détecteur à semi-conducteur comprenant un substrat semi-conducteur propre à émettre un signal électrique lorsqu'il est frappé par un photon. Le substrat semi-conducteur est par exemple réalisé en germanium (Ge).

Chaque spectromètre gamma 9 comprend un amplificateur 24 et un convertisseur 26 analogique/numérique. L'amplificateur 24 est par exemple un amplificateur électronique ou un photomultiplicateur. L'amplificateur 24 amplifie le signal de mesure fourni par le détecteur de photon 22.

Le convertisseur 26 reçoit les signaux de mesure amplifiés et fournit un signal de sortie numérique formant le signal de sortie du spectromètre gamma 9.

Avantageusement, le spectromètre gamma 9 est un spectromètre gamma à moyenne résolution ou haute résolution sur une plage d'énergie comprise entre 50keV et 3MeV. La résolution absolue du spectromètre gamma 9 à une énergie donnée est la largeur entière à mi-hauteur (ou FWHM pour « full width at mid height ») d'un pic d'un spectre fourni par le spectromètre à cette énergie donnée. La résolution relative est exprimée en pourcentage, est égale au rapport de la largeur entière à mi-hauteur sur l'énergie multiplié par 100. Une résolution relative moyenne est comprise entre 1% et 5%. Une résolution relative haute est inférieure à 1%. Ainsi, le spectromètre gamma 9 possède une résolution relative inférieure à 5% (cas de la moyenne résolution) ou inférieure à 1% (cas de la haute résolution).

Dans des modes de réalisation préférés, le spectromètre gamma 9 est un détecteur à scintillation au bromure le lanthane, qui possède généralement une résolution moyenne, ou un détecteur au germanium (Ge), qui possède généralement une résolution haute.

L'unité de traitement 8 est un calculateur, par exemple un ordinateur personnel. Elle comprend un processeur et une mémoire pour le stockage d'applications logicielles exécutables par le processeur pour le traitement des mesures fournies par le dispositif de spectrométrie gamma 7.

L'unité de traitement 8 est connectée au dispositif de spectrométrie gamma 7 pour recevoir le signal de sortie de chaque spectromètre gamma 9. L'unité de traitement 8 reçoit le signal de sortie de chaque spectromètre gamma 9 individuellement. L'unité de traitement 8 possède une entrée associée à chaque spectromètre gamma 9. En variante, l'unité de traitement 8 possède une entrée recevant un signal contenant les signaux de sortie des différents spectromètres gamma 9.

L'unité de traitement 8 est configurée pour enregistrer chaque signal de sortie de chaque spectromètre gamma 9 et établir, sur une période de mesure donnée, un spectre gamma de la population de photons détectés sur la période de mesure en fonction de l'énergie de rayonnement des photons détectés.

Dans le cas où le dispositif de spectrométrie gamma 7 possède plusieurs spectromètres gamma 9, l'unité de traitement 8 est configurée pour additionner les photons détectés par les différents spectromètres gamma 9 sur chaque période de mesure. L'implantation de plusieurs spectromètres gamma 9 permet d'augmenter le nombre de photons pris en compte sur une même période de mesure.

Le dispositif de spectrométrie gamma 7 et l'unité de traitement 8 sont séparés et distants l'un de l'autre. Le dispositif de spectrométrie gamma 7 est accolé à la bande 6 tandis que l'unité de traitement est distante de la bande 6. En variante, le dispositif de spectrométrie gamma 7 et l'unité de traitement 8 sont réunis dans une même unité de détection et de traitement.

En fonctionnement, un flux de matériau est transporté par le convoyeur 4 et défile en regard du dispositif de spectrométrie gamma 7 qui réalise des mesures des rayonnements gamma émis par les différents radionucléides contenus dans le matériau transporté par le convoyeur 4. Les mesures sont réalisées pendant que le matériau est transporté par le convoyeur 4 à une vitesse non nulle.

Le dispositif de mesure de radioactivité 5 est adapté pour mettre en œuvre un procédé de mesure en vue de la caractérisation du matériau transporté par le convoyeur 4. En particulier, l'unité de traitement 8 est programmée pour la mise en oeuvre de ce procédé en fonction des signaux de mesure fournis par le dispositif de spectrométrie gamma 7.

La caractérisation du matériau comprend l'identification et la quantification des différents radionucléides contenus dans le matériau. Elle comprend de préférence le calcul de l'activité, de la masse et/ou de la teneur d'un ou plusieurs radionucléide(s) particulier en fonction des spectres établis à partir des mesures fournies par le dispositif de spectrométrie gamma 7.

Le procédé de mesure comprend la réalisation de mesures de spectrométrie, chacune réalisée sur une période de spectrométrie, au cours de laquelle les photons sont détectés en associant à chaque photon détecté une énergie, pour déterminer la population de photons en fonction de leur énergie. A l'issue d'une mesure de spectrométrie est établi un spectre de la population de photons en fonction de leur énergie sur la période de spectrométrie. Le résultat d'une mesure de spectrométrie est un spectre. Chaque mesure de spectrométrie est réalisée à partir des signaux de mesure fournis par le dispositif de spectrométrie gamma 7 sur une période de spectrométrie. Les périodes de spectrométrie possèdent la même durée d. Les mesures de spectrométrie sont réalisées sur des périodes de spectrométrie successives distinctes.

Le procédé de mesure comprend le calcul de l'activité, de la masse et/ou de la teneur d'un ou plusieurs radionucléide(s) d'intérêt en fonction de chaque mesure de spectrométrie. Le calcul est effectué à la fin de la période de spectrométrie.

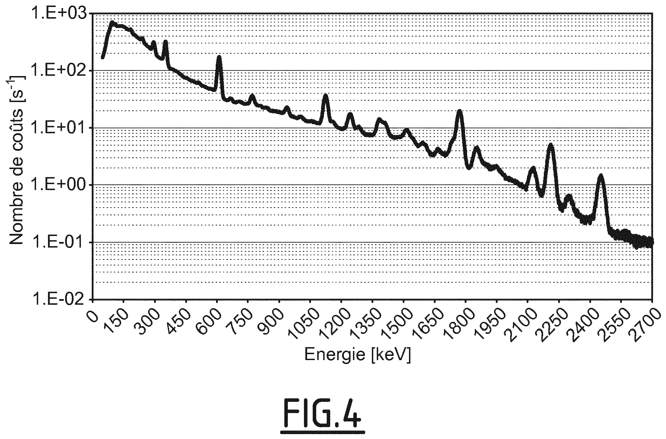

La Figure 4 représente un spectre gamma en énergie d'un matériau radioactif. Le spectre comprend des pics autour d'énergies caractéristiques de radionucléides particuliers. Un radionucléide peut émettre des photons à une ou plusieurs énergies et ainsi être associé à un ou plusieurs pics du spectre.

La décroissance d'un radionucléide peut résulter en un ou plusieurs autres radionucléides descendant avec des énergies caractéristiques différentes. La caractérisation de certains radionucléides permet donc de caractériser un ou plusieurs radionucléide(s) ascendant ou descendant.

L'efficacité de détection e(E) d'un détecteur de photons à une énergie de rayonnement E est le ratio entre le nombre de photons à l'énergie de rayonnement E détectés et le nombre de photons à l'énergie de rayonnement E émis par les produits radioactifs contenus dans le matériau. L'efficacité de détection est un nombre sans unité strictement inférieur à 1. La détection des photons de forte énergie est plus efficace que la détection des photons de faible énergie car ces derniers vont être fortement absorbés au sein même de l'épaisseur du matériau traversé.

Le dispositif de mesure de radioactivité 5 est calibré en déterminant son efficacité de détection en fonction de l'énergie de rayonnement E. L'efficacité de détection en fonction de l'énergie de rayonnement E est déterminée par exemple par étalonnage physique ou modélisée, à l'aide d'outils du commerce (type ISOCS ou MERCURAD - PASCALYS commercialisés par la société CANBERRA)

Le procédé de mesure comprend la mesure de l'activité radioactive d'un radionucléide émettant des photons à une énergie de rayonnement E en fonction de la mesure de l'aire nette M du pic du spectre à l'énergie de rayonnement E, suivant l'équation suivante :

$$A_X(E) = M(E) / (e(E)*I_X(E))$$

où $A_X$ est l'activité radioactive (nombre de désintégration par seconde) du radionucléide X à l'énergie E en Becquerel (Bq), M est l'aire nette du pic du spectre situé à l'énergie de rayonnement E en coups par second (c/s), et $I_X(E)$ est l'intensité de la raie à l'énergie de rayonnement E pour le radionucléide X (nombre de photons émis par Bq). L'intensité $I_X(E)$ est issue de tables de données nucléaires, par exemple une table de type JEFF. L'intensité $I_X(E)$ n'a pas d'unité.

Le procédé de mesure comprend le calcul de la masse d'au moins un radionucléide X détectée par le dispositif de spectrométrie gamma 7 au cours d'une période de spectrométrie en fonction d'un facteur de proportionnalité prédéterminé et de l'activité radioactive $A_X$ de ce radionucléide X.

La masse est déterminée à partir de l'équation suivante :

$$A_X(E) = \lambda_X*N*m_X/Mmol_X$$

où $A_X$ est l'activité du radionucléide X à l'énergie E en Becquerel (Bq), À est la période radioactive du radionucléide X ($s^{-1}$), N est le nombre d'Avogadro du radionucléide X, $m_X$ est la masse de radionucléide X en gramme (g), et $Mmol_X$ est la masse molaire du radionucléide X en gramme par mole (g/mol).

Le facteur de proportionnalité prédéterminé est ainsi $\lambda_X*N/Mmol_X$ qui est une valeur constante pour le radionucléide X.

Le procédé de mesure comprend le calcul de la teneur T du matériau en un ou plusieurs radionucléide(s).

La teneur $T_X$ d'un radionucléide X dans le matériau est calculée en fonction de la masse de ce radionucléide, de la densité moyenne du matériau (en $g/cm^3$) et du volume de matériau convoyé par la bande 6 en regard du dispositif de spectrométrie gamma 7 pendant la période de spectrométrie.

La masse de matériau est mesurée à l'aide du dispositif de pesage 14. Le volume du matériau est calculé à partir du déplacement du convoyeur 4 et de l'aire d'une section transversale du flux matériau sur le convoyeur 4. Cette aire variable est calculée en fonction de la hauteur de matériau sur le convoyeur 4, calculée en fonction de la mesure du capteur de hauteur 12. En variante, si la hauteur est calibrée, il est possible de considérer que cette aire est constante.

Le procédé de mesure comprend la réalisation de mesures de comptage, chacune réalisée sur une période de comptage, à l'issue de laquelle est déterminé le nombre total de photons détectés au cours de la période de comptage, indépendamment de l'énergie des photons. Les périodes de comptage possèdent la même durée p. Les mesures de comptage sont réalisées à l'aide des mesures fournies par le dispositif de spectrométrie gamma 7.

Le comptage de photons sur une période de comptage de durée déterminée permet de calculer la radioactivité globale du matériau.

Le comptage de l'ensemble des photons émergeant du matériau pendant une période de comptage, quelle que soit l'énergie des photons, est effectué par exemple par intégration du spectre fourni par le dispositif de spectrométrie gamma 7 pendant la période de comptage.

Le procédé de mesure comprend la réalisation de plusieurs mesures de comptage pendant la réalisation d'une même mesure de spectrométrie. La durée p des périodes de comptage est inférieure à celles d des périodes de spectrométrie. Chaque période de spectrométrie est subdivisée en n périodes de comptage, n étant un nombre entier strictement supérieur à 1.

Du fait de la nature statistique des mesures photoniques, il est nécessaire d'effectuer une mesure de spectrométrie sur une durée suffisante pour avoir un échantillon représentatif de photons, permettant une analyse fiable du spectre, notamment par comparaison du nombre de photons à différentes énergies.

Il est possible d'effectuer les mesures de comptage sur une durée plus réduite dans la mesure où les résultats de la mesure de comptage sont utilisés uniquement dans leur ensemble pour déterminer la radioactivité du matériau dans son ensemble et non pour caractériser un ou plusieurs radionucléides à partir du nombre de photons détectés à différentes énergies.

Pour un matériau fortement radioactif, la durée d'une mesure de comptage est par exemple de l'ordre d'une seconde et la durée d'une mesure de spectrométrie est de l'ordre de 30 secondes.

Pour un matériau faiblement radioactif, la durée d'une mesure de comptage est par exemple de l'ordre de trente secondes et la durée d'une mesure de spectrométrie est de l'ordre de 30 minutes.

Le procédé de mesure comprend avantageusement le calcul de l'activité, de la masse et/ou de la teneur d'au moins un radionucléide du matériau à l'issue d'une mesure de comptage, en fonction, d'une part, de la mesure de comptage et, d'autre part, de l'activité, de la masse et/ou de la teneur de ce radionucléide calculée à partir d'une mesure de spectrométrie précédente terminée, de préférence la dernière mesure de spectrométrie réalisée.

Cette caractérisation intermédiaire repose sur l'hypothèse que les ratios massiques des différents radionucléides dans le matériau restent constants entre deux mesures de spectrométrie consécutives.

A la fin d'une période de spectrométrie $D_{prec}$, la mesure de spectrométrie réalisée sur cette période de spectrométrie $D_{prec}$ permet de calculer la teneur d'un radionucléide X moyenne $T_X(D_{prec})$ et le comptage global $S(D_{prec})$ des photons détectés sur cette période de spectrométrie, quelle que soit leur énergie.

Au cours de la période de spectrométrie $D_{next}$ suivante, la teneur d'un radionucléide X moyenne $T_X(P_{next})$ sur une période de comptage $P_{next}$ incluse dans cette période de spectrométrie $D_{next}$ suivante en cours est déterminée par exemple suivant l'équation suivante :

$$T_X(P_{next}) = T_X(D_{prec}) * n * s(P_{next})/S(D_{prec})$$

où n est le nombre entier de périodes de comptage dans une période de spectrométrie ; $s(P_{next})$ est le comptage globale de photons sur la période de comptage $P_{next}$ considérée ; $T_X(D_{prec})$ est la teneur en radionucléide X moyenne calculée à partir de la mesure de spectrométrie de la période de spectrométrie $D_{prec}$ précédente ; et $S(D_{prec})$ est le comptage global des photons sur la période de spectrométrie $D_{prec}$ précédente.

Le calcul de la teneur est ainsi effectué pour chaque période de comptage incluse dans la période de spectrométrie en cours, en fonction de la teneur et du comptage global de la période de spectrométrie précédente.

A la fin de chaque période de spectrométrie, la teneur en radionucléide X moyenne et le comptage global des photons sont mis à jour et utilisés pour les calculs de teneur en radionucléide X moyennes de chaque période de comptage de la période de spectrométrie suivante.

Le procédé de mesure comprend la génération de fichiers de mesures consultables par un opérateur. Dans un mode de réalisation, l'unité de traitement 8 est configurée pour générer par exemple à la fin de chaque période de comptage et/ou à la fin de chaque période de spectrométrie, un fichier de mesure indiquant la teneur et la masse d'un ou plusieurs radionucléide(s) d'intérêt. L'unité de traitement 8 comprend avantageusement une base de données stockant les spectres de mesures et les fichiers de mesure.

Les résultats des mesures de spectrométrie peuvent varier en fonction de la hauteur de matériau sur la bande. En effet, la probabilité qu'un photon émis par une couche du matériau éloignée du dispositif de spectrométrie gamma 7 soit absorbé par une couche inférieure du matériau lui-même avant d'atteindre le dispositif de spectrométrie gamma 7 est plus élevée pour un photon de faible énergie que pour un photon de forte énergie. Ainsi, la variation de la hauteur du matériau modifie les efficacités de détection relative des photons en fonction de leur énergie.

Le procédé de mesure comprend la mesure de la hauteur de matériau sur la bande, la détermination de l'efficacité de détection associée à une énergie et à la hauteur mesurée, et la réalisation des calculs d'activité, de masse et/ou de teneur en au moins un radionucléide en fonction de l'énergie de détection déterminée.

Dans un mode de mise en œuvre, le procédé de mesure comprend la détermination de l'efficacité de détection par consultation de tables prédéterminées indiquant l'efficacité de détection en fonction de l'énergie et de la hauteur. Les tables sont par exemple enregistrées dans une mémoire de l'unité de traitement 8.

Le système 2 comprenant le convoyeur 4 et le dispositif de mesure de radioactivité 5 est utilisable pour caractériser différents types de matériaux radioactifs ou potentiellement radioactifs. Le matériau est par exemple un minerai ou un matériau issu d'un démantèlement ou de l'assainissement d'installations nucléaires, ou des terres potentiellement contaminées. Le matériau est un produit en vrac de granulométrie variable (bloc, granulat, poudre). Le matériau est par exemple un minerai, du béton, du ciment, de la terre.

Le système 2 permet de détecter la présence dans le matériau convoyé de tout radionucléide émetteur de photons gamma lors de sa décroissance radioactive. A titre d'exemple, le système 2 permet de détecter l'uranium, le thorium, le césium ou le plutonium.

Le dispositif de mesure de radioactivité 5 est utilisable pour caractériser l'uranium, contenu par exemple dans un minerai.

Plus de 90% des rayonnements gamma émis lors de la décroissance radioactive de l'uranium est lié à la fin de la chaine de décroissance, en particulier le plomb 214 (Pb214) et le bismuth 214 (Bi214).

Ainsi, si un des descendants de l'uranium a la possibilité de migrer différemment de l'uranium, la somme des rayonnements gamma de l'ensemble des descendants de l'uranium n'est pas proportionnelle à la quantité d'uranium présent.

L'uranium 238 (U238) n'est pas directement émetteur de rayonnement gamma mais il est parfaitement corrélable avec son second descendant le protactinium 234 (Pa234m) qui émet une raie à 1001keV. En effet, le Pa234m est toujours à l'équilibre avec l'U238 dans les conditions géologiques, car le Pa234m possède une période très courte et est à l'équilibre avec l'U238 en moins d'un an. L'activité de l'U238 est considérée égale à l'activité du Pa234.

Le procédé de mesure comprend le calcul de l'activité de l'U238 comme indiqué plus haut, à partir de la mesure nette de l'aire du pic à l'énergie 1001keV :

$$A_{U238}(1001keV) = A_{Pa234m}(1001keV) = M(1001keV) / (e(1001keV)*I_{U238}(1001keV))$$

dans laquelle $A_{U238}(1001keV)$ est l'activité de U238 au niveau d'énergie 1001keV ; $A_{Pa234m}(1001keV)$ est l'activité de Pa234m au niveau d'énergie 1001keV ; M(1001keV) est l'aire nette du pic du spectre sous le pic d'énergie à 1001keV, e(1001keV) est l'efficacité du dispositif de spectrométrie gamma pour les photons d'énergie 1001keV et $I_{U238}(1001keV)$ est l'intensité du rayonnement à l'énergie de 1001kev pour U238..

Le Bismuth 214 (Bi214) émet des photons à quatre principales énergies à savoir : 934 keV, 1120 keV, 1509 keV ou 2448 keV.

Le procédé de mesure comprend le calcul de l'activité du Bi214 à partir de chacun de quatre pics d'énergies correspondant au Bi214 :

$A_{Bi214}(E_{Bi}) = M(E_{Bi}) / (e(E_{Bi})*I_{U238}(E_{Bi}))$, pour chaque pic d'énergie de niveau $E_{Bi}$ associé au Bi214.

Le procédé de mesure comprend le contrôle de la mesure de spectrométrie par la comparaison des activités du Bi214 entre elles et/ou avec leur moyenne. Un écart trop important peut être le signe d'une erreur, notamment sur la densité ou le volume de matériau considéré pendant la période de spectrométrie.

Dans un mode de mise en œuvre, le procédé de mesure comprend l'émission d'un signal d'alerte non bloquant s'il existe un écart supérieur à une valeur seuil (par exemple 30%) entre au moins deux des activités du Bi214 et/ou la moyenne des activités du Bi214.

Le procédé de mesure comprend le calcul du ratio entre l'activité de l'U238 et la moyenne des activités du Bi214. Ceci permet de déterminer le niveau de déséquilibre du minerai noté ratio U/Bi.

Avantageusement, le procédé de mesure comprend le calcul d'activité de U235 en fonction des différentes énergies caractéristiques de l'U235, hormis la raie à 186keV qui correspond également à la raie d'émission du radium 226 (Ra226).

Le procédé de mesure comprend le calcul du nombre de coups dus à U235 dans le pic à 186keV en fonction d'une ou plusieurs activités de U235 et/ou de la moyenne des activités de U235, à partir de l'équation suivante :

$$M_{U235}(186keV) = A_{U235} * e(186keV) * I_{U235}(186keV)$$

où $A_{U235}$ est une activité de U235 mesurée à partir d'un pic différent du pic à 186keV ou une moyenne d'activités de U235 mesurée à partir de plusieurs pics différentes du pic à 186keV.

Le procédé de mesure comprend le calcul d'un ratio entre les activités de U235 et de U238, ce qui permet de déterminer le ratio U235/U238 et de vérifier l'enrichissement en U235.

Le procédé de mesure comprend le calcul de l'activité en radium 226 (Ra226) comme la soustraction de l'aire nette totale $M_T$ du pic à 186 keV minorée du nombre de coups dus à U235 évalué précédemment, selon l'équation suivante :

$$A_{Ra226}(186keV) = (M_T(186keV) - M_{U235}(186keV)) / (e(186keV) * I_{U238}(186keV))$$

où $M_T(186keV)$ est l'aire nette totale du pic à 186 keV et $M_{U235}(186keV)$ est le nombre de coups dus à U235.

Le ratio entre $A_{U238}$ et $A_{Ra226}$ permet de déterminer le niveau de déséquilibre du minerai noté ratio U/Ra.

Pour U235, une durée d'acquisition plus longue peut être nécessaire pour calculer des mesures d'activité significative à partir des mesures de spectrométries fournies par le dispositif de spectrométrie. La mesure de l'activité de l'U235 est réalisée par exemple au bout d'un nombre N de périodes de spectrométrie, N étant un nombre entier strictement supérieur à 1. N est par exemple égal à 5.

Grâce à l'invention, il est possible d'effectuer des mesures en ligne significatives sur le matériau lors de son transport sur le convoyeur 4.

Les mesures de spectrométrie permettent de déterminer les activités, masses et/ou teneurs d'un ou plusieurs radionucléides particuliers, pour une caractérisation fine du matériau.

Les mesures de spectrométrie effectuées sur des durées longues et les mesures de comptage effectuées pendant les mesures de spectrométrie, sur des durées plus courtes, permettent de déterminer une teneur et une masse relativement fiables d'un ou plusieurs radionucléides particuliers entre deux mesures de spectrométrie.

Les mesures de spectrométrie et les mesures de comptage sont réalisées à l'aide du même dispositif de spectrométrie gamma. Ainsi, le nombre de composant est limité et le procédé de mesure peut être mise en oeuvre de manière fiable dans des environnements difficiles (poussière, températures...).

Le dispositif de mesure de radioactivité est passif. Il est configuré pour réaliser une mesure passive de la radioactivité intrinsèque du matériau convoyé par le convoyeur 4, sans soumettre le matériau à un rayonnement d'excitation.

Le dispositif de mesure de radioactivité ne procède pas à une mesure active consistant à soumettre le matériau à un rayonnement d'excitation, en particulier neutronique, généré par une source de rayonnement, pour détecter ensuite la radioactivité induite.

La caractérisation du minerai permet par exemple d'effectuer un bilan de sortie de l'atelier situé en amont du convoyeur ou un bilan d'entrée pour l'atelier situé en aval du convoyeur.

Cette mesure permet par exemple de vérifier la teneur en radionucléide du minerai produit dans une mine, par exemple une mine d'uranium ou de thorium, et de vérifier la cohérence avec des mesures effectuées dans une usine de traitement du minerai.

Par exemple dans le cas de terres, de ciment ou de bétons contaminés, cette mesure permet de trier des lots de matériau potentiellement contaminés.

Dans un mode de mise en oeuvre préféré, le procédé de mesure de radioactivité est appliqué sur une quantité donnée d'un matériau (ou lot) que l'on souhaite caractériser dans son ensemble, en déterminant l'activité, la teneur et/ou la masse d'un ou plusieurs radionucléide dans ce lot considéré dans son ensemble. Le lot est convoyé progressivement sur le convoyeur 4 tout en mettant en œuvre le procédé de mesure de radioactivité, et la caractérisation est déterminée à l'issue du passage de l'ensemble du lot, en établissant une caractérisation moyenne pour l'ensemble du lot.

Le procédé de mesure de radioactivité n'est pas mis en œuvre pour trier le lot en séparant différentes parties du lot selon l'activité, la teneur et/ou la masse d'un ou plusieurs radionucléide(s) dans telle ou telle partie du lot.

La caractérisation de l'ensemble d'un lot est utile notamment lors d'opérations de décontamination, pour caractériser différents lots.

## Revendications

1. Dispositif de mesure de la radioactivité d'un matériau lors de son transport par un convoyeur, le dispositif de mesure de radioactivité comprenant un dispositif de spectrométrie gamma (7) possédant au moins un détecteur de spectrométrie gamma (9) et prévu pour être disposé sur le trajet du convoyeur pour réaliser des mesures de spectrométrie sur le matériau lors de son transport par le convoyeur (4), ces mesures étant réalisées par la détection des photons émergeant du flux de matériau transporté, et une unité de traitement (8) pour traiter des signaux de mesure fournis par le dispositif de spectrométrie gamma (7), le dispositif de mesure de radioactivité étant configuré pour la réalisation de mesures de spectrométrie sur le matériau lors de son transport par le convoyeur (4), chaque mesure de spectrométrie étant réalisée sur une période de spectrométrie, au cours de laquelle les photons sont détectés en associant à chaque photon détecté une énergie, pour déterminer la population de photons en fonction de leur énergie, le dispositif de mesure de radioactivité étant **caractérisé en ce qu'**il est en outre configuré pour la réalisation, pendant une mesure de spectrométrie, de plusieurs mesures de comptage gamma sur le matériau lors de son transport par le convoyeur (4), à l'aide du dispositif de spectrométrie gamma (7), chaque mesure de comptage étant réalisée sur une période de comptage, à l'issue de laquelle est déterminé le nombre total de photons détectés au cours de la période de comptage, indépendamment de l'énergie des photons.

2. Dispositif de mesure de radioactivité selon la revendication 1, dans lequel l'unité de traitement (8) est programmée pour le calcul de l'activité, de la masse et/ou de la teneur d'au moins un radionucléide présent dans le matériau en fonction d'une mesure de spectrométrie.

3. Dispositif de mesure de radioactivité selon la revendication 1 ou 2, configuré pour calculer l'activité, la masse et/ou la teneur d'au moins un radionucléide en fonction d'une mesure de comptage et de la teneur de ce radionucléide calculée en fonction d'une mesure de spectrométrie précédente.

4. Dispositif de mesure de radioactivité selon l'une quelconque des revendications précédentes, comprenant un dispositif de mesure de la hauteur de matériau sur le convoyeur (4) au droit du dispositif de spectrométrie gamma (7) et/ou un dispositif de pesage (14) pour mesurer la masse du matériau transporté par le convoyeur (4).

5. Dispositif de mesure de radioactivité selon l'une quelconque des revendications précédentes, configuré pour calculer l'activité, la masse et/ou la teneur d'au moins un radionucléide en fonction d'une efficacité de détection de photons par le dispositif de spectrométrie gamma (7) en fonction de l'énergie de ces photons, de la hauteur de matériau sur le convoyeur (4) au droit du ou de chaque détecteur de spectrométrie gamma (7), et/ou de la masse du matériau transporté par le convoyeur (4).

6. Système de mesure de radioactivité, comprenant un convoyeur (4) pour le transport d'un matériau et un dispositif de mesure de radioactivité (5) selon l'une quelconque des revendications précédentes, dont le dispositif de spectrométrie gamma est disposé sur le trajet du convoyeur (4).

7. Système selon la revendication 6, dans lequel le convoyeur est un convoyeur à bande comprenant une bande sans fin (6) pour le transport du matériau.

8. Procédé de mesure de radioactivité d'un matériau transporté par un convoyeur (4), notamment un convoyeur à bande sans fin, comprenant la réalisation de mesures de spectrométrie gamma sur le matériau lors de son transport par le convoyeur (4), à l'aide d'un dispositif de spectrométrie gamma (7) comprenant au moins un détecteur de spectrométrie gamma (9) agencé sur le trajet du convoyeur (4) pour détecter les photons émis par un flux de matériau lors de son transport par le convoyeur (4), chaque mesure de spectrométrie étant réalisée sur une période de spectrométrie, au cours de laquelle les photons sont détectés en associant à chaque photon détecté une énergie, pour déterminer la population de photons en fonction de leur énergie, le procédé étant **caractérisé en ce qu'**il comprend en outre la réalisation, pendant une mesure de spectrométrie, de plusieurs mesures de comptage gamma sur le matériau lors de son transport par le convoyeur (4), à l'aide du dispositif de spectrométrie gamma (7) utilisé pour les mesures de spectrométrie, chaque mesure de comptage étant réalisée sur une période de comptage, à l'issue de laquelle est déterminé le nombre total de photons détectés au cours de la période de comptage, indépendamment de l'énergie des photons.

9. Procédé de mesure selon la revendication 8, comprenant le calcul de l'activité, de la masse et/ou de la teneur d'au moins un radionucléide présent dans le matériau en fonction d'une mesure de spectrométrie.

10. Procédé selon la revendication 8 ou 9, comprenant le calcul de l'activité, de la masse et/ou de la teneur d'au moins un radionucléide en fonction d'une mesure de comptage et de la teneur de ce radionucléide calculée en fonction d'une mesure de spectrométrie précédente.

11. Procédé selon l'une quelconque des revendications 8 à 10, comprenant la mesure de la hauteur de matériau sur le convoyeur (4) au droit du dispositif de spectrométrie gamma (7) et/ou la mesure de la masse du matériau transporté par le convoyeur (4).

12. Procédé selon l'une quelconque des revendications 8 à 11, comprenant le calcul de l'activité, de la masse et/ou de la teneur d'au moins un radionucléide en fonction d'une efficacité de détection de photons par le dispositif de spectrométrie gamma (7) en fonction de l'énergie de ces photons, de la hauteur de matériau au droit du ou de chaque détecteur de spectrométrie gamma (9), et/ou de la mesure de la masse du matériau transporté par le convoyeur (4).

13. Procédé selon l'une quelconque des revendications 8 à 12, comprenant la vérification d'une mesure de spectrométrie et/ou de calculs effectués à partir de cette mesure de spectrométrie par comparaison d'activité, de masse et/ou de teneur d'au moins un radionucléide, en particulier le bismuth 214 (Bi214), calculées en fonction de raies spectrales principales d'énergies caractéristiques de ce même radionucléide.

14. Procédé selon l'une quelconque des revendications 8 à 13, comprenant le calcul de l'activité, de la masse et/ou de la teneur d'uranium 235 (U235) et/ou d'uranium 238 (U238) en fonction des résultats d'une mesure de spectrométrie pour le protactinium 234 (Pa234).

15. Procédé de mesure selon l'une quelconque des revendications 8 à 14 précédentes, comprenant le calcul de l'activité, de la masse et/ou de la teneur en protactinium 234, le calcul de l'activité, de la masse et/ou de la teneur en bismuth 214 (Bi214) et/ou le calcul de l'activité, de la masse et/ou de la teneur en radium 226 (Ra226), en fonction d'une mesure de spectrométrie.

16. Procédé de mesure selon l'une quelconque des revendications 8 à 15, comprenant le calcul de l'activité, de la masse et/ou de la teneur en uranium 235 (U235) et/ou le calcul de l'activité, de la masse et/ou de la teneur en uranium 238 (U238) en fonction d'une mesure de spectrométrie.

17. Procédé de mesure selon les revendications 15 et 16, dans lequel le calcul de l'activité, de la masse et/ou de la teneur en uranium 235 et/ou le calcul de l'activité, de la masse et/ou de la teneur en uranium 238 est effectué à partir de l'activité, de la masse et/ou de la teneur calculées pour le protactinium 234, le bismuth 214 et/ou le radium 226.

**Patentansprüche**

1. Vorrichtung zum Messen der Radioaktivität eines Materials beim Transport mittels einer Fördereinrichtung, die Vorrichtung zum Messen von Radioaktivität aufweisend eine Gammaspektrometrie-Vorrichtung (7), welche mindestens einen Gammaspektrometrie-Detektor (9) besitzt und dazu vorgesehen ist, in dem Weg der Fördereinrichtung angeordnet zu sein, um Spektrometrie-Messungen auf das Material bei dessen Transport mittels der Fördereinrichtung (4) durchzuführen, wobei diese Messungen durch die Detektion von Photonen, welche aus dem transportierten Materialfluss austreten, durchgeführt werden, und eine Verarbeitungseinheit (8) zum Verarbeiten von Messsignalen, welche durch die Gammaspektrometrie-Vorrichtung (7) geliefert werden, wobei die Vorrichtung zum Messen von Radioaktivität zur Durchführung von Spektrometrie-Messungen auf das Material bei dessen Transport mittels der Fördereinrichtung (4) eingerichtet ist, wobei jede Spektrometrie-Messung über eine Spektrometrie-Periode, während derer die Photonen unter Zuordnen einer Energie zu jedem detektierten Photon detektiert werden, um die Photonen-Population in Abhängigkeit von ihrer Energie zu ermitteln, durchgeführt wird, wobei die Vorrichtung zum Messen von Radioaktivität **dadurch gekennzeichnet ist, dass** sie ferner eingerichtet ist zur Durchführung, während einer Spektrometrie-Messung, von mehreren Gammazähler-Messungen mittels der Gammaspektrometrie-Vorrichtung (7) auf das Material bei dessen Transport mittels der Fördereinrichtung (4), wobei jede Zähler-Messung über eine Zähl-Periode durchgeführt wird, an deren Ende die Gesamtzahl von detektierten Photonen während der Zähl-Periode unabhängig von der Energie der Photonen ermittelt wird.

2. Vorrichtung zum Messen von Radioaktivität gemäß dem Anspruch 1, wobei die Verarbeitungseinheit (8) dazu programmiert ist, die Aktivität, die Masse und/oder den Gehalt von mindestens einem Radionuklid, welches im Material vorhanden ist, auf Grundlage einer Spektrometrie-Messung zu berechnen.

3. Vorrichtung zum Messen von Radioaktivität gemäß dem Anspruch 1 oder 2, welche eingerichtet ist zum Berechnen der Aktivität, der Masse und/oder des Gehalts von mindestens einem Radionuklid auf Grundlage einer Zähler-Messung und des auf Grundlage einer vorherigen Spektrometrie-Messung berechneten Gehalts dieses Radionuklid.

4. Vorrichtung zum Messen von Radioaktivität gemäß irgendeinem der vorhergehenden Ansprüche, aufweisend eine Vorrichtung zum Messen der Materialhöhe auf der Fördereinrichtung (4) auf Höhe der Gammaspektrometrie-Vorrichtung (7) und/oder eine Abwiegevorrichtung (14) zum Messen der Masse des durch die Fördereinrichtung (4) transportierten Materials.

5. Vorrichtung zum Messen von Radioaktivität gemäß irgendeinem der vorhergehenden Ansprüche, welche eingerichtet ist zum Berechnen der Aktivität, der Masse und/oder des Gehalts von mindestens einem Radionuklid auf Grundlage einer Effektivität der Detektion von Photonen durch die Gammaspektrometrie-Vorrichtung (7) in Abhängigkeit von der Energie dieser Photonen, der Materialhöhe auf der Fördereinrichtung (4) auf Höhe des oder jedes Gammaspektrometrie-Detektors (7) und/oder der Masse des durch die Fördereinrichtung (4) transportierten Materials.

6. System zum Messen von Radioaktivität, aufweisend eine Fördereinrichtung (4) für den Transport eines Material und eine Vorrichtung zum Messen von Radioaktivität (5) gemäß irgendeinem der vorhergehenden Ansprüche, deren Gammaspektrometrie-Vorrichtung in dem Weg der Fördereinrichtung (4) angeordnet ist.

7. System gemäß dem Anspruch 6, wobei die Fördereinrichtung ein Bandförderer ist, welche ein Endlosband (6) für den Transport des Materials aufweist.

8. Verfahren zum Messen von Radioaktivität eines mittels einer Fördereinrichtung (4), insbesondere eines Endlosbandförderers, transportierten Materials, aufweisend die Durchführung von Spektrometrie-Messungen auf das Material bei dessen Transport durch die Fördereinrichtung (4) mittels einer Gammaspektrometrie-Vorrichtung (7), welche mindestens einen Gammaspektrometrie-Detektor (9) aufweist, der in dem Weg der Fördereinrichtung (4) angeordnet ist, um Photonen, welche durch einen Fluss des Materials bei dessen Transport mittels der Fördereinrichtung (4) emittiert werden, zu messen, wobei jede Spektrometrie-Messung über eine Spektrometrie-Periode, während derer die Photonen unter Zuordnen einer Energie zu jedem detektierten Photon detektiert werden, um die Photonen-Population in Abhängigkeit von ihrer Energie zu ermitteln, durchgeführt wird, wobei das Verfahren **dadurch gekennzeichnet ist, dass** es ferner aufweist die Durchführung, während einer Spektrometrie-Messung, von mehreren Gammazähler-Messungen mittels der für die Spektrometrie-Messungen verwendeten Gammaspektrometrie-Vorrichtung (7) auf das Material bei dessen Transport mittels der Fördereinrichtung (4), wobei jede Zähler-Messung über eine Zähl-Periode durchgeführt wird, an deren Ende die Gesamtzahl von detektierten Photonen während der Zähl-Periode unabhängig von der Energie der Photonen ermittelt wird.

9. Verfahren zum Messen gemäß dem Anspruch 8, aufweisend die Berechnung der Aktivität, der Masse und/oder des Gehalts von mindestens einem Radionuklid, welches im Material vorhanden ist, auf Grundlage einer Spektrometrie-Messung.

10. Verfahren gemäß dem Anspruch 8 oder 9, aufweisend die Berechnung der Aktivität, der Masse und/oder des Gehalts von mindestens einem Radionuklid auf Grundlage einer Zähler-Messung und des auf Grundlage einer vorherigen Spektrometrie-Messung berechneten Gehalts dieses Radionuklid.

11. Verfahren gemäß irgendeinem der Ansprüche 8 bis 10, aufweisend das Messen der Materialhöhe auf der Fördereinrichtung (4) auf Höhe der Gammaspektrometrie-Vorrichtung (7) und/oder das Messen der Masse des durch die Fördereinrichtung (4) transportierten Materials.

12. Verfahren gemäß irgendeinem der Ansprüche 8 bis 11, aufweisend die Berechnung der Aktivität, der Masse und/oder des Gehalts von mindestens einem Radionuklid auf Grundlage einer Effektivität der Detektion von Photonen durch die Gammaspektrometrie-Vorrichtung (7) in Abhängigkeit von der Energie dieser Photonen, der Materialhöhe auf der Fördereinrichtung (4) auf Höhe des oder jedes Gammaspektrometrie-Detektors (9) und/oder der Masse des durch die Fördereinrichtung (4) transportierten Materials.

13. Verfahren gemäß irgendeinem der Ansprüche 8 bis 12, aufweisend die Verifikation einer Spektrometrie-Messung und/oder von Berechnungen, welche ausgehend von der Spektrometrie-Messung erfolgt sind, durch Vergleichen der Aktivität, der Masse und/oder des Gehalts von mindestens einem Radionuklid, insbesondere das Bismut 214 (Bi214), welche auf Grundlage von Hauptspektrallinien der charakteristischen Energien desselben Radionuklids berechnet wurden.

14. Verfahren gemäß irgendeinem der Ansprüche 8 bis 13, aufweisend die Berechnung der Aktivität, der Masse und/oder des Gehalts von Uran 235 (U235) und oder Uran 238 (U238) auf Grundlage von Ergebnissen einer Spektrometrie-Messung für das Protactinium 234 (P234).

15. Verfahren gemäß irgendeinem der Ansprüche 8 bis 14, aufweisend die Berechnung der Aktivität, der Masse und/oder des Gehalts von Protactinium 234, die Berechnung der Aktivität, der Masse und/oder des Gehalts von Bismut 214 (Bi214) und/oder die Berechnung der Aktivität, der Masse und/oder des Gehalts von Radium 226 (Ra226) auf Grundlage von Ergebnissen einer Spektrometrie-Messung.

16. Verfahren gemäß irgendeinem der Ansprüche 8 bis 15, aufweisend die Berechnung der Aktivität, der Masse und/oder des Gehalts von Uran 235 (U235) und/oder die Berechnung der Aktivität, der Masse und/oder des Gehalts von Uran 238 (U238) auf Grundlage von Ergebnissen einer Spektrometrie-Messung.

17. Verfahren gemäß den Ansprüchen 15 und 16, wobei die Berechnung der Aktivität, der Masse und/oder des Gehalts von Uran 235 (U235) und/oder die Berechnung der Aktivität, der Masse und/oder des Gehalts von Uran 238 (U238) ausgehend von der Aktivität, der Masse und/oder des Gehalts, welche für das Protactinium 234, das Bismut 214 und/oder das Radium 226 berechnet werden, erfolgt.

**Claims**

1. A device for measuring the radioactivity of a material during its transport by a conveyor, the device for measuring radioactivity comprising a gamma spectrometric device (7) having at least one gamma spectrometry detector (9) and provided so as to be positioned on the path of the conveyor in order to conduct spectrometric measurements on the material during its transport by the conveyor (4), these measurements being conducted by detecting photons emerging from the flow of transported material, and a processing unit (8) for processing measurement signals provided by the gamma spectrometric device (7), the device for measuring radioactivity being configured for carrying out spectrometric measurments on the material during its transport by the conveyor (4), each spectrometric measurement being carried out over a spectrometry period, during which the photons are detected by associating with each detected photon an energy, in order to determine the population of photons versus their energy, and for carrying out, during a spectrometric measurement, several gamma counting measurements on the material during its transport by the conveyor (4), by means of the gamma spectrometric device (7), each gamma counting measurement being conducted over a counting period, at the end of which is determined the total number of detected photons during the counting period, independently of the energy of the photons.

2. The device for measuring radioactivity according to claim 1, wherein the processing unit (8) is programed for calculating the activity, the mass and/or the content of at least one radionuclide present in the material depending on a spectrometric measurement.

3. The device for measuring radioactivity according to claim 1 or 2, configured for calculating the activity, the mass and/or the content of at least one radionuclide depending on a counting measurement and on the content of this radionuclide calculated according to a previous spectrometric measurement.

4. The device for measuring radioactivity according to any of the preceding claims, comprising a device for measuring the height of material on the conveyor (4) in register with the gamma spectrometric device (7) and/or a weighing device (14) for measuring the masse of the material transported by the conveyor (4).

5. The device for measuring radioactivity according to any of the preceding claims, configured for calculating the activity, the mass and/or the content of at least one radionuclide depending on a detection efficiency of photons by the gamma spectrometric device (7) according to the energy of these photons, to the height of material on the conveyor (4) in register with said or each gamma spectrometry detector (7), and/or on the mass of the material transported by the conveyor (4).

6. A system for measuring radioactivity, comprising a conveyor (4) for transporting a material and a device for measuring radioactivity (5) according to any of the preceding claims, the gamma spectrometric device of which is positioned on the path of the conveyor (4).

7. The system according to claim 6, wherein the conveyor is a belt conveyor comprising an endless belt (6) for transporting the material.

8. A method for measuring radioactivity of a material transported by a conveyor (4), notably a conveyor with an endless belt, comprising the achievement of gamma spectrometric measurements on the material during its transport by the conveyor, by means of a gamma spectrometric device (7) comprising at least one gamma spectrometry detector (9) laid out on the path of the conveyor (4) for detecting the photons emitted by a flow of material during its transport by the conveyor (4), each spectrometric measurement being carried out over a spectrometry period, during which the photons are detected by associating with each detected photon an energy, in order to determine the population of photons versus their energy, the method comprising the achievement, during a spectrometric measurement, several gamma counting measurements on the material during its transport by the conveyor (4), by means of the gamma spectrometric device (7) used for spectrometric measurements, each gamma counting measurement being conducted over a counting period, at the end of which is determined the total number of detected photons during the counting period, independently of the energy of the photons.

9. The measurement method according to claim 8, comprising the calculation of the activity, of the mass and/or of the content of at least one radionuclide present in the material depending on a spectrometric measurement.

10. The method according to claim 8 or 9, comprising the calculation of the activity, of the mass and/or of the content of at least one radionuclide depending on a counting measurement and on the content of this radionuclide calculated according to a previous spectrometric measurement.

11. The method according to any of claims 8 to 10, comprising the measurement of the height of material on the conveyor (4) in register with the gamma spectrometric device (7) and/or the measurement of the mass of the material transported by the conveyor (4).

12. The method according to any of claims 8 to 11, comprising the calculation of the activity, of the mass and/or of the content of at least one radionuclide depending on a detection efficiency of photons by the gamma spectrometry device (7) according to the energy of these photons, to the height of material in register with said or each gamma spectrometry detector (9), and/or of the measurement of the mass of the material transported by the conveyor (4).

13. The method according to any of claims 8 to 12, comprising the verification of a spectrometric measurement and/or of calculations carried out from this spectrometric measurement by comparison of activity, of mass and/or of content of at least one radionuclide, in particular bismuth 214 (Bi214), calculated according to the main spectral lines of characteristic energies of this same radionuclide.

14. The method according to any of claims 8 to 13, comprising the calculation of the activity, of the mass and/or of the content of uranium 235 (U235) and/or of uranium 238 (U238) depending on the results of a spectrometric measurement for protactinium 234 (Pa234).

15. The measurement method according to any of the preceding claims 8 to 14, comprising the calculation of the activity, of the mass and/or of the content of protactinium 234, the calculation of the activity, of the mass and/or of the content of bismuth 214 (Bi214) and/or calculation of the activity, of the mass and/or of the content of radium 226 (Ra226), depending on a spectrometric measurement.

16. The measurement method according to any of claims 8 to 15, comprising the calculation of the activity, of the mass and/or of the content of uranium 235 (U235) and/or the calculation of the activity, of the mass and/or of the content of uranium 238 (U238) depending on a spectrometric measurement.

17. The measurement method according to claims 15 and 16, wherein the calculation of the activity, of the mass and/or of the content of uranium 235 and/or the calculation of the activity, of the mass and/or of the content of uranium 238 is carried out from the activity, from the mass and/or from the content calculated for protactinium 234, bismuth 214 and/or radium 226.

FIG.1

FIG.2

FIG.3

FIG.4

**EP 3 172 592 B1**

## RÉFÉRENCES CITÉES DANS LA DESCRIPTION

**Documents brevets cités dans la description**

- GB 2017294 A

- US 5162095 A